# EUROPÄISCHE PATENTSCHRIFT

(11) **EP 1 848 082 B1**
(45) Veröffentlichungstag und Bekanntmachung des Hinweises auf die Patenterteilung: **24.06.2009**
(21) Anmeldenummer: 07105870.5
(22) Anmeldetag: 10.04.2007
(51) Int. Cl.: H02G 3/12

(54) **Elektro-Installationssystem umfassend Gerätedose mit Anlagefläche und gegenüber derletzten versetzter Geräte-Trägerebene**
Electrical installation system comprising a device socket with bearing surface and staggered lay-on surface for the device
Système d'installation électronique comprenant un réceptacle pour dispositif avec aire de fixation et aire d'appui pour le dispositif décalées

(30) Priorität: 21.04.2006 DE 202006006453 U
(43) Veröffentlichungstag der Anmeldung: 24.10.2007
(73) Patentinhaber: GIRA Giersiepen GmbH & Co. KG, 42477 Radevormwald (DE)
(72) Erfinder: Foglia, Alexander, 42781 Haan (DE); Schardt, Dirk, 42659 Solingen (DE)
(74) Vertreter: Patentanwälte Dr. Solf & Zapf

(56) Entgegenhaltungen:
- WO-A-03/043139
- DE-A1- 4 404 351
- US-A1- 2003 137 816
- US-B1- 6 450 353
- US-B1- 7 087 837

## Beschreibung

Die vorliegende Erfindung betrifft ein Elektro-Installationssystem für Gebäude zur Installation von elektrischen Installationsgeräten, wie Schalter, Steckdosen und/oder dergleichen, gemäß dem Oberbegriff des Anspruchs 1.

In der beispielsweise durch jedes der Dokumente DE 296 16 958 U1, EP 1 320 244 A1 und EP 1 353 490 A2 bekannten und heute üblichen Gebäude-Elektroinstallationstechnik werden überwiegend einzelne, je eine etwa kreisförmige Aufnahmeöffnung aufweisende Geräte- bzw. Installationsdosen in eine Wand-Montagefläche eingelassen, und zwar entweder in Wandausbrüche eingeputzt (Unterputzmontage, UP-Montage) oder in einen Lochausschnitt einer Hohlwandverkleidung eingesetzt (Hohlwand-Montage). Es wird dann pro Dose ein Installationsgerät mit seinem Geräteeinsatz eingesetzt, bis sein Tragelement auf der die Dose umschließenden Montagefläche aufliegt, so dass die Montagefläche gleichzeitig eine Geräte-Trägerebene bildet. Die Befestigung in der Dose kann mittels sogenannter Spreizkrallen erfolgen oder mit Schrauben, die durch Öffnungen des Tragelementes in Schraublöcher der Dose eingeschraubt werden.

Die bekannte Installation erfolgt somit stets bezogen auf das Niveau der gebäudeseitigen (Wand-) Montagefläche, indem ein äußerer Abdeckrahmen aufgesetzt und in mindestens eine Rahmenöffnung ein bestimmter Zentraleinsatz eingesetzt und befestigt wird, beispielsweise eine Schalterwippe oder ein Steckdosentopf. Dies führt in der Praxis zu einem hohen, d. h. relativ weit von der Wand vorstehenden Geräteaufbau, und zwar wegen der insbesondere bei Steckdosen geforderten Mindestabstände zu spannungsführenden Kontakten.

Für eine Mehrfach-Reihenanordnung mehrerer Installationsgeräte, beispielsweise für 2- oder 3-fach-Kombinationen aus Schalter und/oder Steckdosen, können die bekannten Einzeldosen über rohrartige Verbindungsabschnitte zusammengesteckt werden. Dabei ist dann das sogenannte Stichmaß, d. h. der erforderliche Mittenabstand von Dose zu Dose, festgelegt. Es ist aber schwierig und umständlich, die aneinander gereihten Dosen genau auszurichten und einzuputzen. Weiterhin müssen die einzelnen Installationsgeräte beim Einsetzen in die Dosen auch relativ zueinander sehr genau so ausgerichtet werden, dass der gemeinsame Abdeckrahmen exakt aufgesetzt werden kann. Eine ungenaue Montage wirkt sich sehr unschön in einem schräg stehenden Rahmen aus sowie gegebenenfalls in schräg und ungenau zum Rahmen ausgerichteten Zentraleinsätzen.

Das Dokument US 6 450 353 B1 beschreibt eine Deckelanordnung (cover assembly) für eine Bodendose. Wie sich aus dem Dokument ergibt, wird in einen Betonboden (concrete floor) eine Bodendose eingebettet. In diese Bodendose wird ein Haltering (rocker ring) eingeklebt. Über diesen Haltering kann eine Bodenplatte als erstes Deckelteil (first cover part) montiert werden. Die Bodenplatte liegt dann mit einem äußeren Flansch auf der die Bodendose umgebenden Bodenfläche des Betonbodens auf. Die Bodenplatte weist eine etwa rechteckige Öffnung mit Montageflächen auf. In diesem Bereich der Öffnung kann ein Aufnahmeteil (receptacle) eingesetzt und dann die Öffnung nach oben mit weiteren, zweiten und dritten Deckelteilen (second cover part, third cover part) dicht verschlossen werden. Dabei greifen alle Teile in die Aufnahmeöffnung (compartment) der Bodenplatte ein.

Der vorliegenden Erfindung liegt die Aufgabe zugrunde, ein Installationssystem der genannten Art zu schaffen, mit dem eine sehr flache, nur mit geringer Höhe von der jeweiligen Montagefläche vorstehende Bauweise unter Einhaltung der insbesondere bei Steckdosen geforderten Mindestabstände erreicht werden kann. Zudem soll auf einfache und schnelle Weise eine sehr exakte und akkurate Installation möglich sein.

Erfindungsgemäß wird dies durch die Merkmale des Anspruchs 1 erreicht. Vorteilhafte Ausgestaltungen und spezielle Einzelkomponenten des erfindungsgemäßen Installationssystems sind Gegenstand der abhängigen Ansprüche.

Als Kern des erfindungsgemäßen Installationssystems ist somit eine neuartige Gerätedose anzusehen, die derart ausgebildet ist, dass eine Geräte-Trägerebene zur Tragelement-Auflage innerhalb der Gerätedose liegt und gegenüber einer äußeren, zur Auflage auf der gebäudeseitigen Montagefläche vorgesehenen Anlagefläche um einen zur Montageebene bzw. zur Trägerebene senkrechten Versatz in Geräteeinsetzrichtung versetzt angeordnet ist. Somit liegt die Geräte-Trägerebene relativ zur Anlagefläche - und damit im montierten Zustand auch relativ zur gebäudeseitigen Montageebene (in aller Regel eine Wandfläche) - tiefer in der Gerätedose, so dass auch der bzw. jeder Geräteeinsatz tiefer in die Gerätedose einzusetzen ist. Dadurch wird erreicht, dass die auf der bauseitigen Montageebene anzuordnenden Teile, wie insbesondere ein Wand-Abdeckrahmen, Zentraleinsätze usw., mit entsprechend um den Versatz reduzierter Höhe, also insgesamt mit sehr flacher Bauform konzipiert sein können. Durch die Erfindung wird nahezu eine wandbündige Installation erreicht.

Erfindungsgemäß wird somit jedes Installationsgerät vollständig, also auch mit seinem Tragelement, versenkt in die Gerätedose eingesetzt. Daraus resultiert die vorteilhafte Möglichkeit, die Form der Gerätedose so an die insbesondere etwa quadratische Form der Tragelemente anzupassen, dass im eingesetzten Zustand automatisch eine exakte Positionierung jedes Installationsgerätes über sein Tragelement erreicht wird. Bei einer Auslegung der Gerätedose für GeräteKombinationen von mindestens zwei oder mehreren Geräten (z. B. bis zu vier) wird eine sehr exakte Positionierung aller Geräte in der Trägerebene sowie auch relativ zueinander durch einfaches Einsetzen in die Gerätedose ohne aufwendige Ausricht - /Einstellarbeiten erreicht. Der Aufnahmeraum der Gerätedose entspricht dabei bezüglich seiner Gesamtfläche einem Vielfachen (z. B. 1- bis 4-fachen) der Fläche eines Tragelementes. Jedes Tragelement wird über angrenzende Seitenwandungen der Gerätedose und/oder durch gegenseitige Anlage an einem benachbarten Tragelement exakt ausgerichtet.

Zu dem neuen, erfindungsgemäßen Installationssystem gehört auch mindestens ein speziell angepaßter Abdeckrahmen, der einen Außenrandbereich zur Auflage auf der gebäudeseitigen Montagefläche und mindestens einen Innenrandbereich zur Anlage an dem jeweiligem Tragelement aufweist. Diese Bereiche sind ebenfalls um einen bestimmten Versatz gegeneinander versetzt, wobei dieser Versatz etwa dem beschriebenen Versatz der Gerätedose abzüglich der Dicke des jeweiligen Tragelementes entspricht.

Weiterhin gehört mit Vorteil eine neuartige Unterputzdose zu dem Installationssystem, sofern eine Unterputz-Installation durchgeführt werden soll. Dabei wird die Unterputzdose in einen Wandausbruch eingeputzt. Dazu ist mit Vorteil zusätzlich ein flächiges Putzschutzelement vorgesehen, das deckelartig in den Öffnungsbereich der Unterputzdose lösbar einsetzbar ist. Nach dem Verputzen der Wand kann im Bereich der Dose bzw. des Putzschutzes insbesondere mittels leichter Hammerschläge der Putz entfernt und das Putzschutzelement entnommen werden. Danach wird die erfindungsgemäße Gerätedose in die Unterputzdose eingesetzt und befestigt ("Dose in Dose-Installation").

Die erfindungsgemäße Gerätedose eignet sind zudem auch als Hohlwanddose zur unmittelbaren Installation in üblichen Hohlwandkonstruktionen (ohne Unterputzdose).

Weitere Ausgestaltungsmerkmale und daraus resultierende Vorteile werden auch noch in der anschließenden Beschreibung erläutert werden.

Anhand von bevorzugten Ausführungsbeispielen, die in der Zeichnung veranschaulicht sind, soll die Erfindung im Folgenden genauer erläutert werden. Dabei zeigen:
- Fig. 1: eine perspektivische Explosionsdarstellung der wesentlichen Einzelkomponenten des erfindungsgemäßen Installationssystems,
- Fig. 2: einen Querschnitt durch eine erfindungsgemäße Gerätedose,
- Fig. 3: einen Querschnitt durch einen erfindungsgemäßen Abdeckrahmen,
- Fig. 4: einen Schnitt analog zu Fig. 2 und 3 in einer Zusammenbaulage von Gerätedose und Abdeckrahmen (ohne Installationsgerät),
- Fig. 5: einen Schnitt in der Ebene V - V in Fig. 4, d. h. in Längsrichtung einer beispielhaften Ausführung als Zweifachdose,
- Fig. 6: eine Perspektivansicht der Gerätedose,
- Fig. 7: eine Perspektivansicht einer zusätzlichen Unterputzdose für die UP-Installation,
- Fig. 8: eine Perspektivansicht entsprechend Fig. 6 und 7, wobei die Gerätedose in die Unterputzdose eingesetzt ist,
- Fig. 9: eine perspektivische Explosionsansicht von Einzelteilen eines erfindungsgemäßen Abdeckrahmens in einer besonderen Ausführung,
- Fig. 10: eine weitere Perspektivansicht der Unterputzdose gemäß Fig. 7 und 8 aus einer Blickrichtung schräg von unten auf einen Bodenbereich der Dose,
- Fig. 11 bis 13: Perspektivansichten von Einzelteilen der bevorzugt modulartig aufgebauten Unterputzdose,
- Fig. 14: eine weitere Perspektivansicht der Unterputzdose mit einem zusätzlichen, aufgesetzten Putzschutzelement,
- Fig. 15: eine Darstellung analog zu Fig. 14 mit gelöstem bzw. noch nicht ganz aufgesetztem Putzschutzelement,
- Fig. 16 a) bis i): Darstellungen zur Erläuterung des Montageablaufs im Falle einer UP-Installation,
- Fig. 17: eine Perspektivansicht auf eine erfindungsgemäße Gerätedose in einer Hohlwand-Installation und
- Fig. 18: einen vergrößerten Schnitt in der Ebene Y- Y in Fig. 17.

In den verschiedenen Figuren der Zeichnung sind gleiche Teile stets mit den gleichen Bezugszeichen versehen. Deshalb braucht jedes Teil nur einmal beschrieben zu werden, wobei die Beschreibung aber für alle Zeichnungsfiguren gilt, in denen das entsprechende Teil ebenfalls zu erkennen ist.

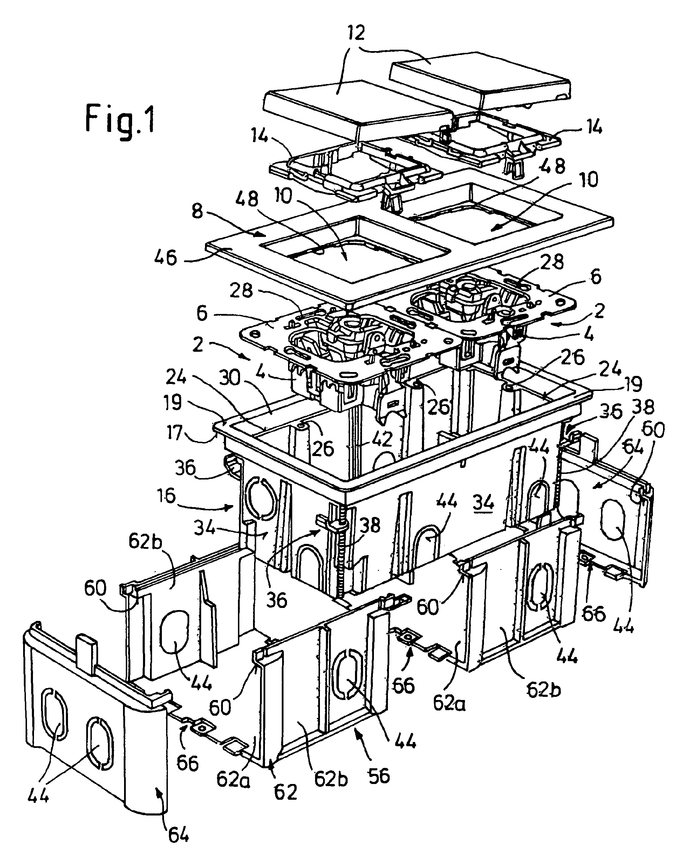

In Fig. 1 ist - rein beispielhaft - eine Zweier-Kombination mit zwei elektrischen Installationsgeräten 2 veranschaulicht, die hier - weiterhin lediglich als Beispiel - als Schalter ausgebildet sind; es kann sich aber auch um Steckdosen und/oder dergleichen handeln. Jedes Installationsgerät 2 besteht aus einem sockelartigen Geräteeinsatz 4, der gerätespezifische Bestandteile enthält, und einem rahmen- oder plattenförmigen Tragelement 6 (sogenannter "Tragring"), das eine im Wesentlichen quadratische Außenform aufweist und in aller Regel aus Metallblech oder aber aus Kunststoff besteht. Weiterhin ist ein Abdeckrahmen 8 vorgesehen, der für jedes Installationsgerät 2 eine Rahmenöffnung 10 zur Aufnahme eines mit dem Installationsgerät 2 zu verbindenden Zentraleinsatzes 12 aufweist. Bei einer Mehrfach-, z. B. Zweier-Kombination kann der Abdeckrahmen 8 eventuell auch nur eine Rahmenöffnung für alle vorhandenen Geräte 2 bzw. Zentraleinsätze 12 aufweisen. Bei der dargestellten Ausführung der Geräte 2 als Schalter ist jeder Zentraleinsatz 12 als Schaltwippe ausgebildet, wobei zusätzlich je ein rahmenförmiges Halteteil 14 vorgesehen ist. Wenn als Installationsgerät 2 eine Steckdose vorgesehen ist (in der Zeichnung nicht dargestellt), ist der zugehörige Zentraleinsatz als Steckdosentopf (insbesondere sogenannter "Schuko-Topf") zur Aufnahme eines Anschlußsteckers ausgebildet. Der Steckdosentopf wird insbesondere über mindestens eine Schraube an dem Installationsgerät 2 bzw. dem Geräteeinsatz 4 befestigt, so dass sich dabei das Halteteil 14 erübrigt.

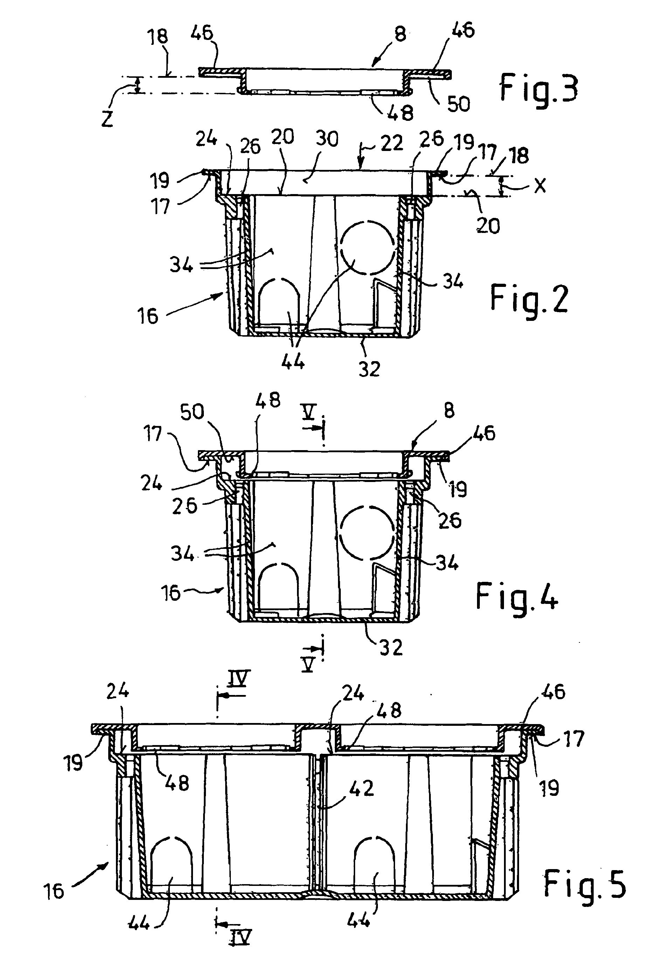

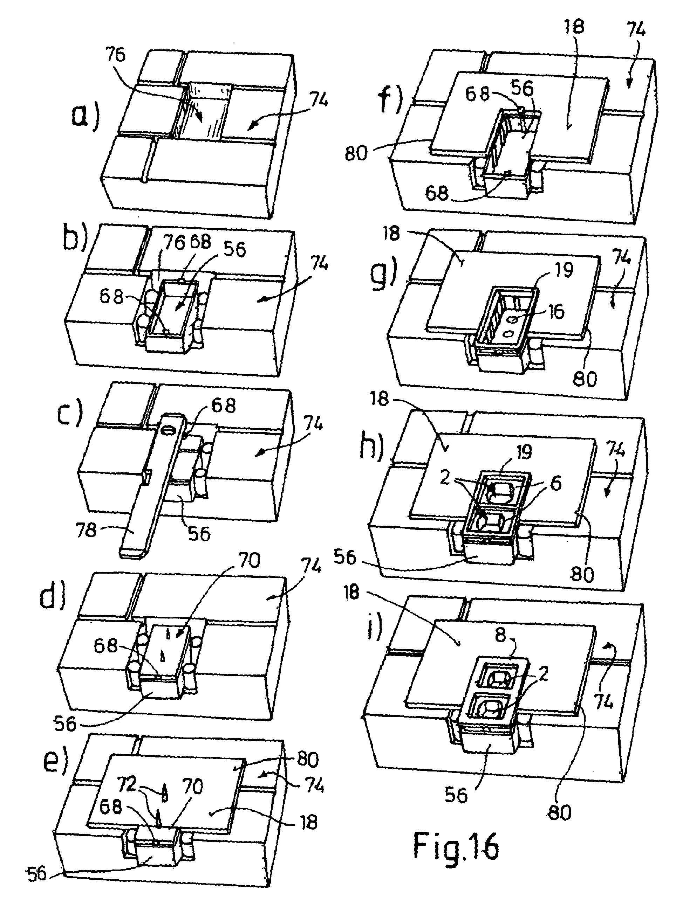

Im Rahmen des erfindungsgemäßen Installationssystems ist gemäß Fig. 1 weiterhin eine neuartige Gerätedose 16 vorgesehen. Diese Gerätedose 16 ist gemäß Fig. 16 bis 18 im Bereich einer gebäudeseitigen Montagefläche 18 so versenkt (in Unterputz- oder Hohlwand-Montage) zu installieren, dass sie mit ihrer Öffnungsseite im Wesentlichen bündig mit einer äußeren Anlagefläche 17 auf der Montagefläche 18 liegt. Dazu weist die Gerätedose 16 mit Vorteil einen öffnungsseitigen, umlaufenden und nach außen weisenden Randsteg 19 zur Auflage auf der Montagefläche 18 auf. Weiterhin ist die Gerätedose 16 erfindungsgemäß derart ausgebildet, dass sie das bzw. jedes Installationsgerät 2 vollständig, d. h. einschließlich Tragelement 6, aufnimmt. Dazu ist innerhalb der Gerätedose 16 eine Geräte-Trägerebene 20 zur Tragelement-Auflage gebildet. Wie sich nun insbesondere aus Fig. 2 ergibt, ist erfindungsgemäß vorgesehen, dass die Geräte-Trägerebene 20 gegenüber der unteren Anlagefläche 17 des Randsteges 19 (der ja zur Auflage auf der Montagefläche 18 vorgesehen ist) um einen zu der Trägerebene 20 senkrechten Versatz X in Geräte-Einsetzrichtung (Pfeil 22) versetzt angeordnet ist. Im montierten Zustand (vgl. Fig. 16 bis 18) liegt damit die Geräte-Trägerebene 20 auch gegenüber der Montagefäche 18 tiefer, so dass auch der/jeder Geräteeinsatz 4 tiefer in die Dose einzusetzen ist. Für die Praxis ist es vorteilhaft, wenn der Versatz X 6 bis 10 mm, insbesondere etwa 8 mm, beträgt.

Die Geräte-Trägerebene 20 wird innerhalb der Gerätedose 16 durch eine Stufenfläche 24 zur Tragelement-Auflage definiert. Im Bereich dieser Stufenfläche 24 sind mit Vorteil Schraublöcher 26 zur Schraubbefestigung des jeweiligen Tragelementes 6 vorgesehen, indem nicht dargestellte Befestigungsschrauben durch Löcher 28 des Tragelementes 6 (vgl. Fig. 1) in die Schraublöcher 26 eingeschraubt werden. Üblicherweise sind die Löcher 28 des/jedes Tragelementes 6 schlüssellochartig ausgebildet.

Es ist weiterhin vorteilhaft, dass die Gerätedose 16 derart in Anpassung an die üblicher Weise im Wesentlichen quadratische Außenform des jeweiligen Tragelementes 6 mit einer entsprechend quadratischen oder rechteckigen Grundform ausgebildet ist, dass das Tragelement 6 des bzw. jedes einzusetzenden Geräteeinsatzes 4 in seinem eingesetzten und auf der Stufenfläche 24 aufliegenden Zustand durch angrenzende Seitenwandungsbereiche 30 der Gerätedose 16 innerhalb dieser exakt positioniert ist. Im Falle einer Mehrfachkombination werden die benachbarten Tragelemente 6 zusätzlich auch durch gegenseitige randliche Anlage aneinander positioniert. Diese vorteilhafte Ausgestaltung ermöglicht eine sehr schnelle und dennoch äußert akkurate Installation der Installationsgeräte 2 ohne aufwendige Ausricht- und Einstellarbeiten. Die Geräte 2 brauchen lediglich in die Gerätedose 16 eingesetzt und befestigt zu werden. Der Aufnahmeraum der Gerätedose 16 ist dabei bezüglich seiner Gesamtfläche entsprechend einem Vielfachen, insbesondere dem 1- bis 4-fachen der Fläche eines Tragelementes 6 ausgelegt.

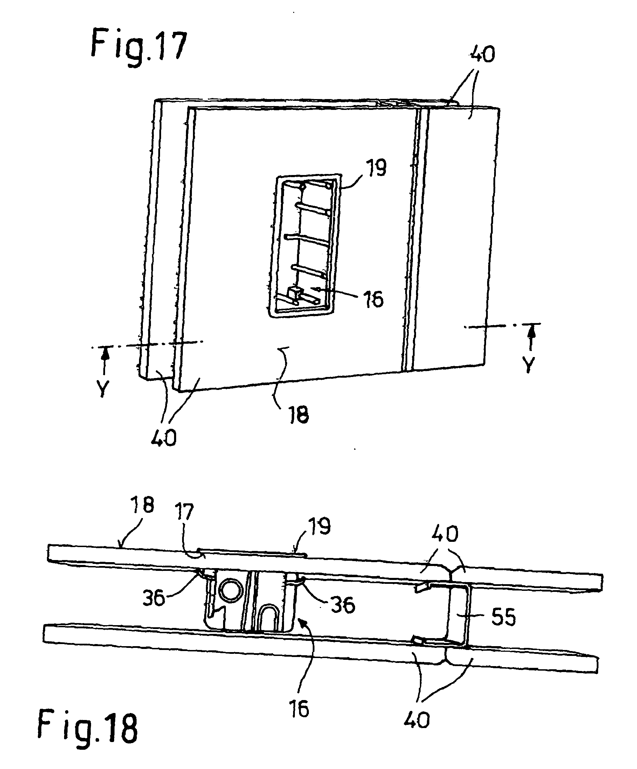

Die erfindungsgemäße Gerätedose 16 ist zweckmäßig als einstückiges Kunststoff-Formteil mit einen Boden 32 und vier Seitenwandungen 34 ausgebildet. Auf der dem Boden 32 gegenüberliegenden Seite ist die Dose 16 zur Geräteaufnahme offen ausgebildet. Weiterhin weist die Gerätedose 16 zur gebäudeseitigen Montage geeignete Befestigungsmittel auf, insbesondere Schraubkrallen 36, wie sie auch bei sogenannten Hohlwanddosen vorgesehen sind. Die Schraubkrallen 36 können von der Dosen-Öffnungsseite her über Krallenschrauben 38 (nur in Fig. 1 erkennbar) in Richtung zum Randsteg 19 hin gespannt werden, wobei sie eine bauseitige Haltekante hintergreifen, beispielsweise gemäß Fig. 18 eine Wandverkleidungsplatte 40 im Falle einer Hohlwandmontage.

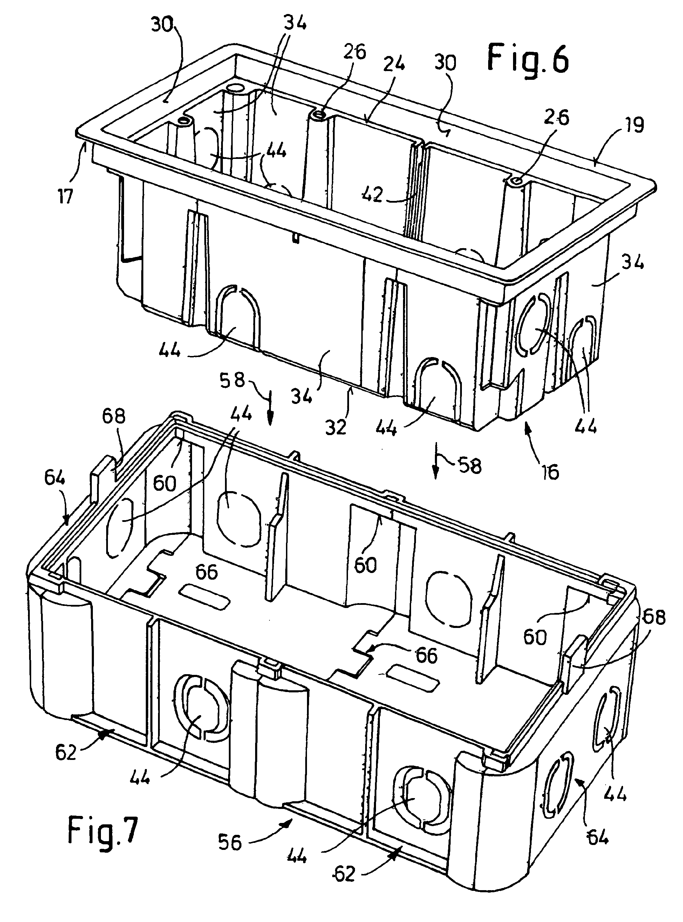

In weiterer vorteilhafter Ausgestaltung - siehe beispielsweise Fig. 6 - weist die Gerätedose 16 in ihrem Innenbereich auf den Seitenwandungen 34 nutartige Führungen 42 zur Aufnahme von selbst nicht dargestellten Trennwandelementen auf (sogenannte "Schottwände"). Die Führungen 42 können wie dargestellt zwischen je zwei Längsstegen gebildet sein. Mit Vorteil können dabei die nicht dargestellten Trennwandelemente weitere Schraublöcher aufweisen, um bei Bedarf das jeweilige Tragelement 6 zusätzlich befestigen zu können. Weiterhin weist die Gerätedose 16 Kabeleinführungen im Bereich der Seitenwandungen 34 und/oder des Bodens 32 auf, vorzugsweise in Form von über Sollbruchstellen entfernbaren Wandbereichen 44.

Was nun den oben bereits erwähnten Abdeckrahmen 8 betrifft, so kann dieser aufgrund des erfindungsgemäßen Versatzes X (Fig. 2) mit einem äußerst flachen Außenrandbereich 46 zur Auflage auf der gebäudeseitigen Montagefläche 18 ausgebildet sein. Weiterhin weist der Abdeckrahmen 8 gemäß Fig. 3 im Bereich jeder Rahmenöffnung 10 einen Innenrandbereich 48 zur Anlage an dem jeweiligen Tragelement 6 des zugehörigen Installationsgerätes 2 auf. Da erfindungsgemäß die Installationsgeräte 2 relativ zur gebäudeseitigen Montagefläche 18 tiefer installiert werden, ist auch der Abdeckrahmen 8 in Anpassung daran mit einem entsprechenden Versatz Z zwischen der Auflageseite des Außenrandbereichs 46 und der Anlageseite des Innenrandbereichs 48 ausgebildet. Dabei entspricht Z etwa X abzüglich der Dicke des Tragelementes 6; vgl. hierzu auch Fig. 4 und 5. Dabei ist bevorzugt vorgesehen, dass der Außenrandbereich 46 auf seiner Unterseite eine Ausnehmung 50 aufweist (Fig. 3), die im montierten Zustand den Randsteg 19 der Gerätedose 16 aufnimmt bzw. übergreift (Fig. 4, 5).

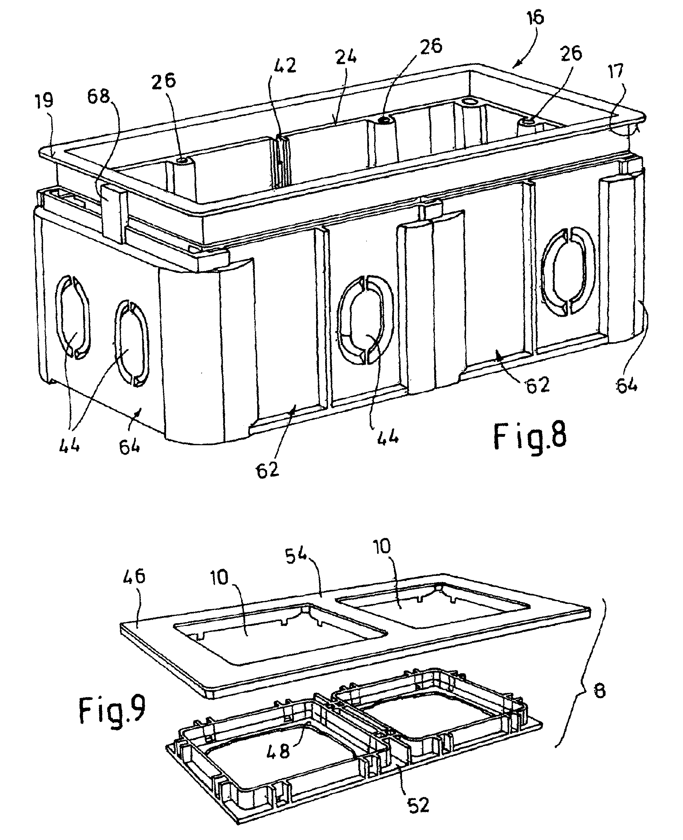

Der Abdeckrahmen 8 kann mit Vorteil als einstückiges Kunststoff-Formteil ausgebildet sein. In der in Fig. 9 dargestellten Ausführungsvariante besteht der Abdeckrahmen 8 aus einem Kunststoff-Trägerrahmen 52 und einer insbesondere als Stanzformteil aus Metallblech geformten Rahmenabdeckung 54.

Wie bereits angedeutet wurde, kann die Gerätedose 16 gemäß Fig. 17 und 18 unmittelbar in eine Wandöffnung einer Hohlwandkonstruktion eingesetzt und mittels der Schraubkrallen 36 befestigt werden. In Fig. 18 ist noch ein Ständerprofil 55 der Hohlwandkonstruktion erkennbar, an dem die Verkleidungsplatten 40 befestigt sind.

Alternativ dazu ist für eine Unterputz-Installation für die/jede Gerätedose 16 eine zusätzliche Unterputzdose 56 vorgesehen. Diese Unterputzdose 56 ist in üblicher Weise in einen Wandausbruch einzuputzen, wobei nachfolgend die Gerätedose 16 in die Unterputzdose 56 einsetzbar und darin insbesondere ebenfalls mittels der Schraubkrallen 36 befestigbar ist. In den Fig. 6 und 7 ist veranschaulicht, wie die Gerätedose 16 in Pfeilrichtung 58 in die Unterputzdose 56 einzusetzen ist. Dazu ist die Unterputzdose 56 in Anpassung an die Gerätedose 16 derart ausgebildet, dass unabhängig von der jeweiligen Einputzsituation, insbesondere der Einputztiefe, die Gerätedose 16 bei ihrer Befestigung relativ zu der gebäudeseitigen Montagefläche 18 ausrichtbar ist. Dazu weist die Unterputzdose 56 in ihrem Innenbereich Hinterschneidungsbereiche 60 auf (siehe insbesondere Fig. 1 und 7 sowie Fig. 11 bis 13), die von den Schraubkrallen 36 der Gerätedose 16 hintergriffen werden können.

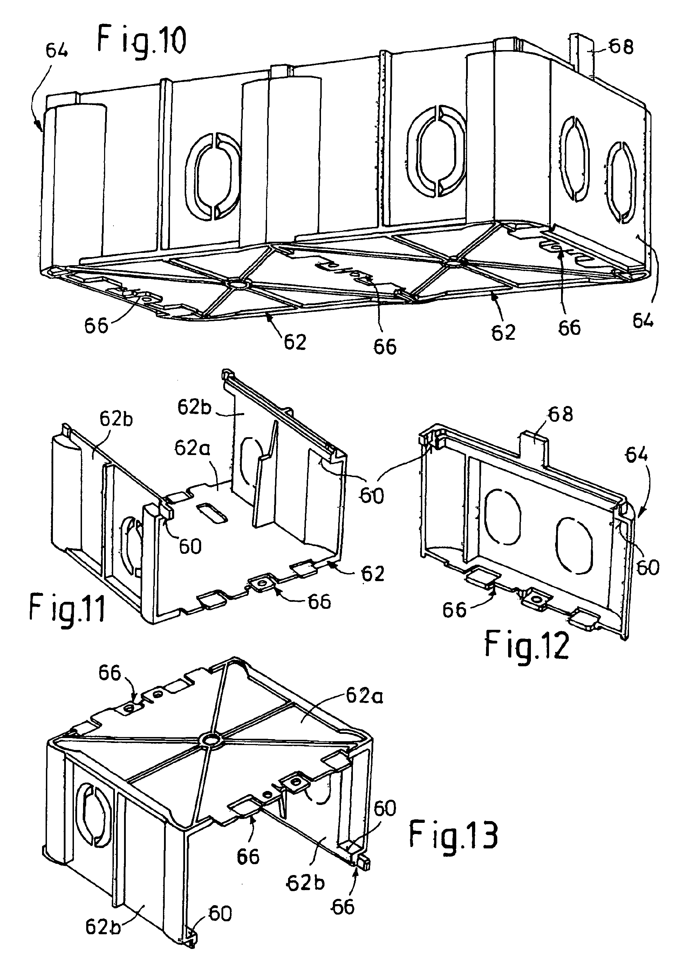

In weiterer bevorzugter Ausgestaltung ist die Unterputzdose 56 modular aus mehreren, in unterschiedlichen Kombinationen zusammensetzbaren Einzelteilen ausgebildet, und zwar aus mindestens einem im Querschnitt U-förmigen Mittelteil 62 mit einem Boden 62a und zwei Seitenwänden 62b sowie aus zwei stirnseitigen Endkappen 64. Im Ausführungsbeispiel für eine Zweifach-Gerätekombination gemäß Fig. 1 besteht die Unterputzdose 56 aus zwei Mittelteilen 62 und zwei Endkappen 64. Hierzu wird auch auf Fig. 7, 8 und 10 sowie auf die gesonderten Darstellungen in Fig. 11 bis 13 verwiesen. Vorteilhafterweise sind dabei die Einzelteile 62, 64 über kammartige und rastende Eingriffkonturen 66 lösbar zusammensteckbar.

In weiterer vorteilhafter Ausgestaltung weist die Unterputzdose 56 - ebenso wie die Gerätedose 16 - herausbrechbare Wandungsbereiche 44 zur Bildung von Kabeldurchführungen sowie - insbesondere an ihren Stirnwandungen bzw. an den Endkappen 64 - Ansätze 68 auf, die über eine Dosen-Öffnungsebene nach oben hervorragen und als Hilfsmittel zur Einputztiefen-Bestimmung sowie zur Anlage für eine Wasserwaage zwecks Ausrichten der Unterputzdose 56 vor dem Einputzen dienen. Dies wird im Folgenden noch anhand der Fig. 16 erläutert werden.

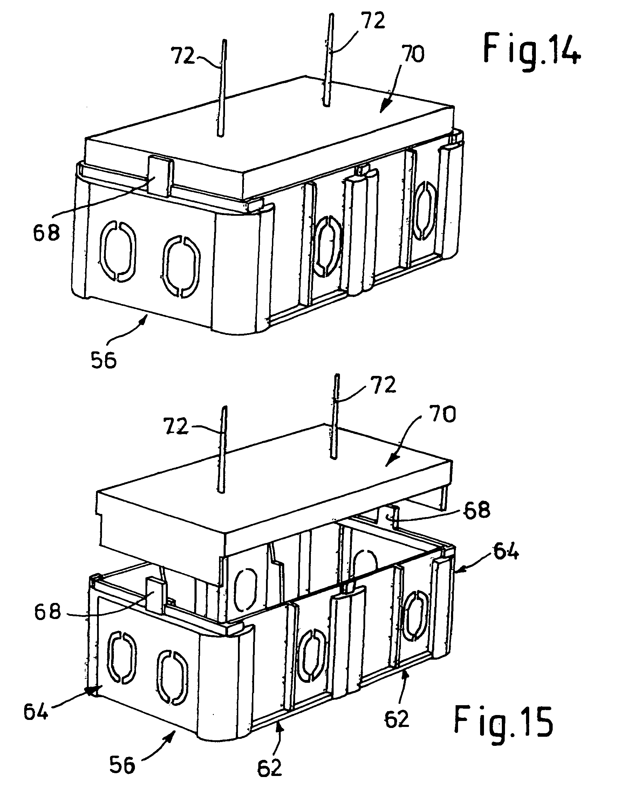

Als weiteres Hilfsmittel ist gemäß Fig. 14 und 15 ein deckelartiges Putzschutzelement 70 zum lösbar fixierten Ein- bzw. Aufsetzen im Öffnungsbereich der Unterputzdose 56 während des Einputzvorgangs vorgesehen. Dieses Putzschutzelement 70 besteht vorzugsweise aus Pappe oder Karton und weist mindestens einen von der Oberfläche vorstehenden, beispielsweise stiftförmigen Findungsansatz 72 auf. Dabei ist der/jeder Findungsansatz 72 zudem mit Vorteil elastisch so verformbar, dass er beim Verputzen umlegbar ist, sich dann aber selbsttätig wieder aufstellt und nachfolgend aus der Putzschicht vorsteht.

An dieser Stelle soll der Installationsvorgang bei der Unterputz-Montage anhand der Fig. 16 genauer erläutert werden. Zunächst wird gemäß Fig. 16a in einer angedeuteten, beispielsweise gemauerten Wand 74 ein Ausbruch 76 mit geeigneter Form und Größe erstellt. Gemäß Fig. 16b wird anschließend eine erfindungsgemäße, zuvor mit geeigneter Größe zusammengesetzte Unterputzdose 56 in dem Ausbruch 76 fixiert, beispielsweise mit Gips oder dergleichen Haftputz oder mit einem sonstigen geeigneten Material, wie Bauschaum oder Klebstoff, wobei auch mindestens ein bauseits verlegtes Kabel nach Entfernen eines Wandungsbereichs 44 eingeführt werden kann. Gemäß Fig. 16c kann die Unterputzdose 56 über ihre Ansätze 68 leicht und exakt mittels eines geeigneten Hilfsmittels, wie z. B. einer Wasserwaage 78, ausgerichtet werden. Das Einsetzen erfolgt mit einer Mindest-Einsetztiefe soweit, dass die gesamte Unterputzdose 56 einschließlich ihrer Ansätze 68 unterhalb der fertig verputzten Wandebene liegt. Gemäß Fig. 16d wird das Putzschutzelement 70 auf die Unterputzdose 56 aufgesetzt. Anschließend kann gemäß Fig. 16e eine Putzschicht 80 aufgebracht werden, die dann die äußere Montagefläche 18 definiert. Über die Findungsansätze 72 kann der Bereich des Putzschutzelementes 70 und der darunterliegenden, eingeputzten Unterputzdose 56 leicht wiedergefunden und beispielsweise durch leichte Hammerschläge freigelegt werden. Dabei kann über die Seitenkanten des Putzschutzelementes 70 der Putz relativ sauber weggebrochen werden, so dass gemäß Fig. 16f eine angepasste Putzöffnung entsteht, durch die die erfindungsgemäße Gerätedose 16 gemäß Fig. 16g passend so in die Unterputzdose 56 eingesetzt werden kann, dass sie mit der Anlagefläche 17 ihres äußeren Randsteges 19 auf der Putzschicht 80 bzw. der Montagefläche 18 zur Auflage kommt. Dadurch wird eine optimale Justierung der Dose 16 und der zu installierenden Geräte 2 relativ zur Wand-Montagefläche 18 möglich. Das/jedes zuvor in die Unterputzdose 56 eingeführte Kabel wird entsprechend auch nach Entfernen eines Wandbereichs 44 in die Gerätedose 16 eingeführt. Die Ausrichtung und Befestigung der Gerätedose 16 innerhalb der Unterputzdose 56 erfolgt auf einfache und schnelle Weise mittels der Schraubkrallen 36. Anschließend brauchen gemäß Fig. 16h nur die Installationsgeräte 2 elektrisch angeschlossen, eingesetzt und befestigt zu werden. Schließlich erfolgt gemäß Fig. 16i die abschließende Montage des Abdeckrahmens 8 und der hier nicht dargestellten Zentraleinsätze (12).

Bei der Hohlwand-Installation gemäß Fig. 17 und 18 braucht nur in eine der Verkleidungsplatten 40 eine entsprechende Öffnung geschnitten zu werden, in die dann unmittelbar die erfindungsgemäße Gerätedose 16 eingesetzt und mittels der Schraubkrallen 36 befestigt wird. Die weitere Installation erfolgt analog zur UP-Montage.

Es ist darauf hinzuweisen, dass Schutz auch für die Einzelkomponenten des erfindungsgemäßen Installationssystems beansprucht wird. Dies gilt insbesondere für die Gerätedose 16, den Geräte-Abdeckrahmen 8, die Unterputzdose 56 und das Putzschutzelement 70 in jeweils erfindungsgemäßer und aneinander angepaßter Ausgestaltung.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Elektro-Installationssystem für Gebäude zur Installation von elektrischen Installationsgeräten (2), wie Schalter, Steckdosen und/oder dergleichen, mit mindestens einer gebäudeseitig zu installierenden Gerätedose (16), mindestens einem Installationsgerät (2) und mindestens einem Abdeckrahmen (8), wobei jedes Installationsgerät (2) aus einem Geräteeinsatz (4) mit einem rahmen- oder plattenförmigen Tragelement (6) besteht, wobei der Geräteeinsatz (4) in die Gerätedose (16) einsetzbar ist, und wobei der Abdeckrahmen (8) einen Außenrandbereich (46) zur Auflage auf einer gebäudeseitigen Montagefläche (18) und mindestens einen Innenrandbereich (48) zur Anlage an dem jeweiligen Tragelement (6) aufweist,
**dadurch gekennzeichnet, dass** die Gerätedose (16) in ihrem Innenbereich eine eine Geräte-Trägerebene (20) definierende Tragelement-Auflage (24) sowie in ihrem Öffnungsbereich eine Anlagefläche (17) zur Auflage auf der gebäudeseitigen Montagefläche (18) aufweist, wobei die Geräte-Trägerebene (20) gegenüber der Anlagefläche (17) um einen Versatz (X) in Einsetzrichtung (22) versetzt angeordnet ist, und wobei der Abdeckrahmen (8) in Anpassung an den Ebenen-Versatz (X) der Gerätedose (16) mit einem Versatz (Z) zwischen einer Montageflächen-Auflageseite des Außenrandbereiches (46) und einer Tragelement-Anlageseite des Innenrandbereiches (48) ausgebildet ist.

2. Installationssystem nach Anspruch 1,
**dadurch gekennzeichet, dass** die Gerätedose (16) in ihrem äußeren Öffnungsrandbereich einen die Anlagefläche (17) aufweisenden Randsteg (19) zur Auflage auf der gebäudeseitigen Montagefläche (18) aufweist.

3. Installationssystem nach Anspruch 1 oder 2,
**dadurch gekennzeichnet, dass** die Gerätedose (16) in ihrem Innenwandbereich eine die Trägerebene (20) definierende Stufenfläche (24) als Tragelement-Auflage sowie vorzugsweise im Bereich der Stufenfläche (24) Schraublöcher (26) zum Einschrauben von Tragelement-Befestigungsschrauben aufweist.

4. Installationssystem nach einem der Ansprüche 1 bis 3,
**dadurch gekennzeichnet, dass** die Gerätedose (16) derart in Anpassung an eine im Wesentlichen quadratische Außenform des jeweiligen Tragelementes (6) mit einer quadratischen oder rechteckigen Grundform ausgebildet ist, dass das Tragelement (6) des/jedes Geräteeinsatzes (4) in seinem eingesetzten Zustand durch angrenzende Seitenwandungsbereiche (30) der Gerätedose (16) exakt positioniert ist.

5. Installationssystem nach einem der Ansprüche 1 bis 4,
**dadurch gekennzeichnet, dass** die Gerätedose (16) als Kunststoff-Formteil mit einem Boden (32) und vier Seitenwandungen (34) ausgebildet ist.

6. Installationssystem nach einem der Ansprüche 1 bis 5,
**dadurch gekennzeichnet, dass** die Gerätedose (16) zur gebäudeseitigen Montage Befestigungsmittel, insbesondere Schraubkrallen (36) nach Art von Hohlwanddosen-Befestigungen, aufweist.

7. Installationssystem nach einem der Ansprüche 1 bis 6,
**dadurch gekennzeichnet, dass** die Gerätedose (16) in ihrem Innenbereich Führungen (42) zur Aufnahme von Trennwardelementen aufweist.

8. Installationssystem nach einem der Ansprüche 1 bis 7,
**dadurch gekennzeichnet, dass** der/jeder Abdeckrahmen (8) mindestens eine Rahmenöffnung (10) zur Aufnahme eines Geräte-Zentraleinsatzes (12), wie einer Schaltwippe, eines Steckdosentopfes oder dergleichen aufweist.

9. Installationssystem nach einem der Ansprüche 1 bis 8.
**dadurch gekennzeichnet, dass** der/jeder Abdeckrahmen (8) als einstückiges Kunststoff-Formteil ausgebildet ist oder aus einem Kunststoff-Trägerrahmen (52) und einer insbesondere aus Metallblech geformten Rahmenabdeckung (54) besteht.

10. Installationssystem nach einem der Ansprüche 1 bis 9,
**dadurch gekennzeichnet, dass** für eine Hohlwandinstallation die/jede Gerätedose (16) unmittelbar in eine Wandöffnung einer Verkleidungsplatte (40) einsetzbar und befestigbar ist.

11. Installationssystem nach einem der Ansprüche 1 bis 9,
**dadurch gekennzeichnet, dass** für eine Unterputz-Installation für die/jede Gerätedose (16) eine zusätzliche, in eine Wand einzuputzende Unterputzdose (56) vorgesehen ist, wobei die Gerätedose (16) in die Unterputzdose (56) einsetzbar und darin befestigbar ist.

12. Installationssystem nach Anspruch 11,
**dadurch gekennzeichnet, dass** die/jede Unterputzdose (56) in Anpassung an die Gerätedose (16) derart ausgebildet ist, dass unabhängig von ihrer jeweiligen Einputzsituation die Gerätedose (16) bei ihrer Befestigung relativ zu der gebäudeseitigen Montagefläche (18) ausrichtbar ist.

13. Installationssystem nach Anspruch 11 oder 12 und Anspruch 6,
**dadurch gekennzeichnet, dass** die/jede Unterputzdose (56) in ihrem Inneren Hinterschneidungsbereiche (60) aufweist, die von den Schraubkrallen (36) der Gerätedose (16) hintergreifbar sind.

14. Installationssystem nach einem der Ansprüche 11 bis 13,
**dadurch gekennzeichnet, dass** die/jede Unterputzdose (56) modular aus mehreren, in verschiedenen Kombinationen zusammensetzbaren Einzelteilen ausgebildet ist, und zwar aus mindestens einem im Querschnitt U-förmigen Mittelteil (62) mit einem Boden (62a) und zwei Seitenwänden (62b) sowie aus zwei stirnseitigen Endkappen (64).

15. Installationssystem nach Anspruch 14,
**dadurch gekennzeichnet, dass** die Einzelteile (62, 64) über rastende Eingriffskonturen (66) lösbar zusammensteckbar sind.

16. Installationssystem nach einem der Ansprüche 11 bis 15,
**dadurch gekennzeichnet, dass** die/jede Unterputzdose (56) insbesondere an ihren Stirnwandungen über eine Dosen-Offnungsebene hervorragende Ansätze (68) zur Einputztiefen-Bestimmung und zur Anlage für eine Wasserwaage oder dergleichen Meßhilfsmittel zwecks Ausrichtung der Unterputzdose (56) beim Einputzen aufweist.

17. Installationssystem nach einem der Ansprüche 11 bis 16,
**gekennzeichnet durch** ein deckelartiges Putzschutzelement (70) zum lösbar fixierten Einsetzen in den Öffnungsbereich der Unterputzdose (56) während des Einputzvorgangs.

18. Gerätedose (16) für ein Installationssystem nach einem der Ansprüche 1 bis 17,
**gekennzeichnet durch** eine im Dosen-Innenbereich eine Geräte-Trägerebene (20) definierende Tragelement-Auflage (24) sowie **durch** eine im Öffnungsbereich vorgesehene Anlagefläche (17) zur Auflage auf einer gebäudeseitigen Montagefläche (18), wobei die Geräte-Trägerebene (20) gegenüber der Anlagefläche (17) um einen Versatz (X) in Einsetzrichtung (22) versetzt ist und der Versatz (X) an einen zwischen einer Montageflächen-Auflageseite eines Rahmen-Außenrandbereiches (46) und einer Tragelement-Anlageseite eines Rahmen-Innenrandbereiches (48) gebildeten Versatz (Z) eines Abdeckrahmens (8) angepasst ist.

19. Geräte-Abdeckrahmen (8) für ein Installationssystem nach einem der Ansprüche 1 bis 17, wobei der Abdeckrahmen (8) einen Außenrandbereich (46) zur Auflage auf einer gebäudeseitigen Montagefläche (18) und mindestens einen Innenrandbereich (48) zur Anlage an einem Tragelement (6) eines Installationsgerätes (2) aufweist,
**dadurch gekennzeichnet, dass** zwischen einer Montageflächen-Auflageseite des Außenrandbereiches (46) und einer Tragelement-Anlageseite des Innenrandbereiches (48) ein Versatz (Z) gebildet ist, der an einen zwischen einer Geräte-Trägerebene (20) und einer Montageflächen-Anlagefläche (17) gebildeten Versatz (X) einer Gerätedose (16) angepasst ist.

## Claims

1. An electrical installation system for buildings for the installation of electrical installation equipment (2), such as switches, sockets and/or the like, with at least one connector socket (16) to be installed on the building side, at least one item of installation equipment (2) and at least one covering frame (8), each item of installation equipment (2) consisting of an equipment insert (4) with a frame-shaped or plate-shaped carrying element (6), the equipment insert (4) being able to be inserted into the connector socket (16), and the covering frame (8) having an outer edge region (46) for lying on a building-side mounting surface (18), and at least one inner edge region (48) for contact on the respective carrying element (6),
**characterised in that** the connector socket (16) has in its inner region a carrying-element rest (24) which defines an equipment support plane (20) and also in its opening region a contact surface (17) for lying on the building-side mounting surface (18), the equipment support plane (20) being arranged offset relative to the contact surface (17) by an offset (X) in the direction of insertion (22), and the covering frame (8), in adaptation to the plane offset (X) of the connector socket (16), being formed with an offset (Z) between a mounting-surface contact side of the outer edge region (46) and a carrying-element contact side of the inner edge region (48).

2. An installation system according to Claim 1,
**characterised in that** the connector socket (16) in its outer opening edge region has a marginal land (19) having the contact surface (17) for lying on the building-side mounting surface (18).

3. An installation system according to Claim 1 or 2,
**characterised in that** the connector socket (16) has in its inner wall region a step surface (24) which defines the support plane (20) as a carrying-element rest and also, preferably in the region of the step surface (24), screw holes (26) for screwing-in carrying-element fastening screws.

4. An installation system according to one of Claims 1 to 3,
**characterised in that** the connector socket (16), in adaptation to a substantially square outer form of the respective carrying element (6), is designed with a square or rectangular basic form, such that the carrying element (6) of the/each equipment insert (4) in its inserted state is positioned exactly by adjoining side wall regions (30) of the connector socket (16).

5. An installation system according to one of Claims 1 to 4,
**characterised in that** the connector socket (16) is in the form of a moulded plastics-material part with a base (32) and four side walls (34).

6. An installation system according to one of Claims 1 to 5,
**characterised in that** the connector socket (16) for building-side assembly has fastening means, in particular screw and claw fixings (36) in the manner of hollow-wall box fastening means.

7. An installation system according to one of Claims 1 to 6,
**characterised in that** the connector socket (16) has in its inner region guides (42) for receiving partition elements.

8. An installation system according to one of Claims 1 to 7,
**characterised in that** the/each covering frame (8) has at least one frame opening (10) for receiving a central equipment insert (12), such as a rocker switch, a socket receptacle or the like.

9. An installation system according to one of Claims 1 to 8,
**characterised in that** the/each covering frame (8) is in the form of a moulded plastics-material part in one piece or consists of a plastics-material support frame (52) and a frame cover (54) formed in particular from sheet metal.

10. An installation system according to one of Claims 1 to 9,
**characterised in that** for a hollow-wall installation the/each connector socket (16) can be inserted and fastened directly into a wall opening in a cladding plate (40).

11. An installation system according to one of Claims 1 to 9,
**characterised in that** for a flush installation an additional concealed mounting box (56) which is to be plastered into a wall is provided for the/each connector socket (16), the connector socket (16) being able to be inserted into the concealed mounting box (56) and being able to be fastened therein.

12. An installation system according to Claim 11,
**characterised in that** the/each concealed mounting box (56), in adaptation to the connector socket (16), is designed such that independently of its respective flush-mounting situation the connector socket (16) upon fastening can be oriented relative to the building-side mounting surface (18).

13. An installation system according to Claim 11 or 12 and Claim 6,
**characterised in that** the/each concealed mounting box (56) has in its interior undercut regions (60) behind which the screw and claw fixings (36) of the connector socket (16) can be engaged.

14. An installation system according to one of Claims 11 to 13,
**characterised in that** the/each concealed mounting box (56) is formed in modular fashion of a plurality of individual parts which can be assembled in various combinations, namely of at least one middle part (62) which is U-shaped in cross-section with a base (62a) and two side walls (62b) and also of two end-face end plates (64).

15. An installation system according to Claim 14,
**characterised in that** the individual parts (62, 64) can be detachably assembled via locking engagement contours (66).

16. An installation system according to one of Claims 11 to 15,
**characterised in that** the/each concealed mounting box (56) in particular on its end walls has projections (68) projecting over a box opening plane for determining flush-mounting depths and for a spirit level or the like measuring aid to rest on for the purpose of orienting the concealed mounting box (56) when plastering-in.

17. An installation system according to one of Claims 11 to 16,
**characterised by** a lid-like plaster protection element (70) for detachably fixed insertion into the opening region of the concealed mounting box (56) during the plastering-in operation.

18. A connector socket (16) for an installation system according to one of Claims 1 to 17,
**characterised by** a carrying-element rest (24) defining an equipment support plane (20) in the inner socket region and also by a contact surface (17) provided in the opening region for lying on a building-side mounting surface (18), the equipment support plane (20) being offset relative to the contact surface (17) by an offset (X) in the direction of insertion (22) and the offset (X) being adapted to an offset (Z) of a covering frame (8) which is formed between a mounting-surface contact side of a frame outer edge region (46) and a carrying-element contact side of a frame inner edge region (48).

19. An equipment covering frame (8) for an installation system according to one of Claims 1 to 17, wherein the covering frame (8) has an outer edge region (46) for lying on a building-side mounting surface (18) and at least one inner edge region (48) for contact on a carrying element (6) of an item of installation equipment (2),
**characterised in that** an offset (Z) is formed between a mounting-surface contact side of the outer edge region (46) and a carrying-element contact side of the inner edge region (48), which offset is adapted to an offset (X) of a connector socket (16) formed between an equipment support plane (20) and a mounting-surface contact surface (17).

## Revendications

1. Système d'installation électrique pour bâtiments, destiné à l'installation d'appareils électriques à installer (2), tels que des interrupteurs, des prises et/ou similaires, avec au moins un réceptacle pour appareil (16) à installer côté bâtiment, au moins un appareil à installer (2) et au moins un cache (8), système dans lequel chaque appareil à installer (2) se compose d'un insert d'appareil (4) avec un élément de support (6) en forme de cadre ou de plaque, dans lequel l'insert d'appareil (4) peut être inséré dans le réceptacle pour appareil (16), et dans lequel le cache (8) présente une zone périphérique extérieure (46) pour s'appuyer sur une surface de montage (18) côté bâtiment et au moins une zone périphérique intérieure (48) pour s'appliquer à l'élément de support (6) respectif,
**caractérisé en ce que** le réceptacle pour appareil (16) présente dans sa zone intérieure un appui d'élément de support (24) définissant un plan de support d'appareil (20) ainsi que dans sa zone d'ouverture une surface d'application (17) pour s'appuyer sur la surface de montage (18) côté bâtiment, **en ce que** le plan de support d'appareil (20) est disposé de façon décalée en face de la surface d'application (17) avec un décalage (X) dans la direction d'insertion (22), et **en ce que** le cache (8) est réalisé en adaptation au décalage de plan (X) du réceptacle pour appareil (16) avec un décalage (Z) entre un côté d'application de surface de montage de la zone périphérique extérieure (46) et un côté d'appui d'élément de support de la zone périphérique intérieure (48).

2. Système d'installation selon la revendication 1, **caractérisé en ce que** le réceptacle pour appareil (16) présente dans sa zone périphérique d'ouverture extérieure une entretoise périphérique (19) présentant la surface d'application (17) pour s'appuyer sur la surface de montage (18) côté bâtiment.

3. Système d'installation selon la revendication 1 ou 2, **caractérisé en ce que** le réceptacle pour appareil (16) présente dans sa zone de paroi intérieure une surface graduée (24) définissant le plan de support (20) comme un appui d'élément de support, ainsi que de préférence dans la zone de la surface graduée (24) des trous de vis (26) pour le vissage de vis de fixation d'élément de support.

4. Système d'installation selon l'une quelconque des revendications 1 à 3, **caractérisé en ce que** le réceptacle pour appareil (16) est réalisé, en adaptation à une forme extérieure substantiellement carrée de l'élément de support respectif (6), avec une forme de base carrée ou rectangulaire, de telle sorte que l'élément de support (6) de l'insert d'appareil (4), ou de chaque insert d'appareil, est dans son état inséré positionné avec précision par des zones de paroi latérales adjacentes (30) du réceptacle pour appareil (16).

5. Système d'installation selon l'une quelconque des revendications 1 à 4, **caractérisé en ce que** le réceptacle pour appareil (16) est réalisé comme une pièce moulée en plastique avec un fond (32) et quatre parois latérales (34).

6. Système d'installation selon l'une quelconque des revendications 1 à 5, **caractérisé en ce que** le réceptacle pour appareil (16) présente pour un montage côté bâtiment des moyens de fixation, en particulier des griffes à vis (36) à la manière des fixations pour boîtes pour murs creux.

7. Système d'installation selon l'une quelconque des revendications 1 à 6, **caractérisé en ce que** le réceptacle pour appareil (16) présente dans sa zone intérieure des glissières (42) pour recevoir des éléments de cloison.

8. Système d'installation selon l'une quelconque des revendications 1 à 7, **caractérisé en ce que** le/chaque cache (8) présente au moins une ouverture de cadre (10) pour recevoir un insert central pour appareil (12), comme un interrupteur à touche basculante, une boîte pour prise encastrée ou similaires.

9. Système d'installation selon l'une quelconque des revendications 1 à 8, **caractérisé en ce que** le/chaque cache (8) est réalisé comme une pièce moulée en plastique intégrale ou se compose d'un cadre de support en plastique (52) et d'un recouvrement de cadre (54) façonné, en particulier en tôle métallique.

10. Système d'installation selon l'une quelconque des revendications 1 à 9, **caractérisé en ce que** pour une installation dans des murs creux, le/chaque réceptacle pour appareil (16) peut être inséré et fixé directement dans une ouverture de mur d'un panneau d'habillage (40).

11. Système d'installation selon l'une quelconque des revendications 1 à 9, **caractérisé en ce que** pour une installation encastrée, , une boîte d'encastrement (56) supplémentaire, à encastrer dans un mur, est prévue pour le/chaque réceptacle pour appareil (16), et **en ce que** le réceptacle pour appareil (16) peut être inséré dans la boîte d'encastrement (56) et fixé dans celle-ci.

12. Système d'installation selon la revendication 11, **caractérisé en ce que** la/chaque boîte d'encastrement (56) est réalisée en adaptation au réceptacle pour appareil (16) de telle sorte qu'indépendamment de sa situation d'encastrement respective, le réceptacle pour appareil (16) peut lors de sa fixation être aligné par rapport à la surface de montage (18) côté bâtiment.

13. Système d'installation selon la revendication 11 ou 12 et la revendication 6, **caractérisé en ce que** la/chaque boîte d'encastrement (56) présente à l'intérieur de celle-ci des zones en contre-dépouille (60) qui peuvent être saisies par les griffes à vis (36) du réceptacle pour appareil (16).

14. Système d'installation selon l'une quelconque des revendications 11 à 13, **caractérisé en ce que** la/chaque boîte d'encastrement (56) est réalisée de façon modulaire à partir de plusieurs pièces constitutives pouvant être assemblées dans différentes combinaisons, notamment à partir d'au moins une pièce centrale (62) à section en forme de U avec un fond (62a) et deux parois latérales (62b) ainsi qu'à partir de deux capuchons d'extrémité (64) côté avant.

15. Système d'installation selon la revendication 14, **caractérisé en ce que** les pièces constitutives (62, 64) peuvent s'emboîter de façon amovible par l'intermédiaire de contours de mise en prise (66) encliquetables.

16. Système d'installation selon l'une quelconque des revendications 11 à 15, **caractérisé en ce que** la/chaque boîte d'encastrement (56) présente en particulier au niveau de ses parois avant des saillies (68) dépassant d'un plan d'ouverture de boîte pour la détermination des profondeurs d'encastrement et pour l'application d'un niveau à bulle ou d'accessoires de mesure similaires en vue de l'alignement de la boîte d'encastrement (56) lors de l'encastrement.

17. Système d'installation selon l'une quelconque des revendications 11 à 16, **caractérisé par** un élément de protection de crépi (70) de type couvercle pour une insertion fixée de façon amovible dans la zone d'ouverture de la boîte d'encastrement (56) pendant l'opération d'encastrement.

18. Réceptacle pour appareil (16) pour un système d'installation selon l'une quelconque des revendications 1 à 17, **caractérisé par** un appui d'élément de support (24) définissant dans la zone intérieure du réceptacle un plan de support d'appareil (20) ainsi que par une surface d'application (17), prévue dans la zone d'ouverture, pour s'appuyer sur la surface de montage (18) côté bâtiment, dans lequel le plan de support d'appareil (20) est décalé par rapport à la surface d'application (17) d'un décalage (X) dans la direction d'insertion (22), et le décalage (X) est adapté à un décalage (Z) entre un côté d'appui de surface de montage d'une zone périphérique extérieure de cadre (46) et un côté d'application d'élément de support d'une zone périphérique intérieure de cadre (48) d'un cache (8).

19. Cache pour appareil (8) pour un système d'installation selon l'une quelconque des revendications 1 à 17, dans lequel le cache (8) présente une zone périphérique extérieure (46) pour s'appuyer sur une surface de montage (18) côté bâtiment et au moins une zone périphérique intérieure (48) pour s'appliquer à un élément de support (6) d'un appareil à installer (2),
**caractérisé en ce qu'** un décalage (Z) est formé entre un côté d'appui de surface de montage de la zone périphérique extérieure (46) et un côté d'application d'élément de support de la zone périphérique intérieure (48), ce décalage étant adapté à un décalage (X) d'un réceptacle pour appareil (16), formé entre un plan de support d'appareil (20) et une surface d'application de surface de montage (17).
